# EUROPÄISCHE PATENTSCHRIFT

(11) **EP 1 093 717 B1**
(45) Veröffentlichungstag und Bekanntmachung des Hinweises auf die Patenterteilung: **18.12.2002**
(21) Anmeldenummer: 00125731.0
(22) Anmeldetag: 05.06.1998
(51) Int. Cl.: A01K 9/00, A01K 5/02

(54) **Einrichtung zum Zuführen von Nahrungsmittel für Haustiere**
Device for supplying feed to domestic animals
Dispositif pour la distribution de nourriture à des animaux domestiques

(30) Priorität: 11.06.1997 DE 19724550
(43) Veröffentlichungstag der Anmeldung: 25.04.2001
(62) Teilanmeldung aus: 98929423.6
(73) Patentinhaber: Förster, Martin, 78234 Engen (DE)
(72) Erfinder: Förster, Martin, 78234 Engen (DE)
(74) Vertreter: Weiss, Peter, Dr. rer. nat.

(56) Entgegenhaltungen:
- EP-A- 0 119 783
- BE-A- 856 089
- CH-A- 680 634
- DE-A- 2 025 332
- FR-A- 2 157 272
- FR-A- 2 204 347
- FR-A- 2 613 180
- FR-A- 2 625 407
- GB-A- 2 130 067
- GB-A- 2 155 749
- US-A- 4 620 505
- US-A- 4 653 432
- US-A- 4 803 955
- US-A- 5 231 953
- US-A- 5 551 374

## Beschreibung

Die vorliegende Erfindung betrifft eine Einrichtung zum Zuführen von flüssigen Nahrungsmittel für Haustiere, insbesondere Kälber oder Lämmer mit einer Entnahmestelle, insbesondere Getränkeschale oder Saugstelle und zumindest einer Nahrungsmittelquelle.

Derartige Einrichtungen sind heutzutage in vielfältiger Form und Ausführung auf dem Markt bekannt und gebräuchlich. Sie dienen zur Fütterung von Haustieren, insbesondere Jungtieren, wie Kälber, Lämmer und Ferkel.

Aus dem Stand der Technik ist eine Vorrichtung zum Herstellen von verschiedenen Flüssigkeitskonzentraten, für Kälbermilch nach der DE-OS 15 57 243 bekannt. Hier wird aufwendig einem Mixbehälter sowohl Wasser, als auch Milchpulver zugeführt. Dabei wird ein Zusatz-Wasserbehälter mit einem weiteren Wasserbehälter verbunden, welcher an eine Mischeinrichtung anschliesst. Diese ist dann über eine Zuführungsleitung mit mindestens einem weiteren Sauger verbunden. Nachteilig daran ist, dass kein exakter Einfluss auf eine bestimmte Mengenregelung und Vermischung von Nahrungsmittel genommen werden kann. Auch eine Temperaturregelung ist hier nicht vorgesehen.

Ferner ist aus dem Stand der Technik nach der CH 680 635 ein Verfahren und eine Vorrichtung zur Versorgung von Vieh mit Medikamenten bekannt, wobei über zwei separate Leitungen zwei verschiedene Nahrungsmittel einem Sauger zugeführt werden. Dort ist ein Medikamenten-Behälter separat mit dem Sauger verbunden und führt diesem direkt Nahrungsmittel zu. Auch das Tränkbecken schliesst an den Sauger direkt an. Nachteilig ist hier, dass ein Durchmischen von Nahrungsmittel nur schwer möglich ist. Zudem können die Mengen nicht exakt bestimmt werden, wenn beispielsweise bei unterschiedlicher Saugweise eines Tieres unterschiedlich gesaugt wird.

Die US 4,803,955 offenbart einen Fütterungsautomaten für flüssiges Nahrungsmittel, bei welchem das Nahrungsmittel aus einem Vorratsbehälter durch einen Wärmetauscher geführt wird, in welchem ein Reservoir gebildet ist. Dort wird das Nahrungsmittel gesammelt und anschliessend an einen Nuckel abgegeben.

Die US 5,551,374 beschreibt eine Fütterungsvorrichtung, bei welcher das Nahrungsmittel in einen Vorratsbehälter gelangt und in einem weiteren Behälter mit weiteren Nahrungsmitteln vermischt wird. Nach dem Vermischen wird das Nahrungsmittel der Entnahmestelle zugeführt.

Die EP 0 119 783 beschreibt einen Fütterungsautomaten, bei welchem das Nahrungsmittel aus einem Vorratsbehälter in ein Wärmebecken geführt wird und dort erwärmt wird. Nach dem Erwärmen wird das Nahrungsmittel dann der Entnahmestelle zugeführt.

Der vorliegenden Erfindung liegt die Aufgabe zugrunde, eine Einrichtung der oben genannt Art zu schaffen, mit welcher auf sehr exakte Weise eine Mengen- und Temperaturmessung, eine gute Durchmischung, sowie eine optimierte Steuerung möglich ist, wobei auch Einfluss auf das Ansaug- und Saugverhalten eines Jungtieres genommen werden soll. Zudem soll eine derartige Einrichtung sehr kostengünstig herzustellen sein.

Zur Lösung dieser Aufgabe führen die Merkmale des Patentanspruches 1.

Mit der vorliegenden Erfindung ist eine Einrichtung geschaffen, welche ein Zuführen von unterschiedlichen Nahrungsmitteln aus unterschiedlichen Quellen optimiert. Dabei münden Zuleitungen der einzelnen unterschiedlichen Nahrungsquellen in einen gemeinsamen Puffer. In diesem Puffer findet auch eine Mischung der einzelnen Nahrungsmittel statt. Dieser Puffer ist mit Entnahmestellen herkömmlicher Art, wie Getränkeschalen, Saugstellen oder sonstigen Behältern verbunden. Diese werden von einem gut durchmischten und richtig temperierten Nahrungsmittel gespeist. Da in den einzelnen Zuleitungen zwischen Nahrungsmittelquellen und Puffer Ventile, bevorzugt als Magnetventile, oder Pumpen, bevorzugt als Schlauchpumpen, eingesetzt sind, lässt sich das Nahrungsmittel aus der Nahrungsmittelquelle sehr leicht in den Puffer befördern. Diese Pumpen bzw. Magnetventile sind von einer Steuerung aus separat ansteuerbar. Dies geschieht über eine herkömmliche Datenleitung bzw. Datenbus-Leitung. Somit kann jedes Nahrungsmittel aus jedem Behälter in einer gewünschten Menge dem Puffer bzw. direkt der Entnahmestelle zugeführt werden.

Der Puffer hat die Funktion, dass durch seine Bauweise und insbesondere durch seine eingesetzte Membran mit Sensor und Schalter Nahrungsmittel in einer bestimmten Menge aufgenommen werden kann, die von dem Kalb, Haustier über die Entnahmestelle abgesaugt wird. Das Kalb kann ohne Unterbrechungen sehr langsam oder sehr schnell den Puffer leersaugen. Ist der Puffer entleert, so gibt der entsprechende Sensor über den Schalter ein Signal an die Steuerung, dass wieder Nahrungsmittel dem Puffer zugeführt werden muss. Die entsprechenden Magnetventile oder Pumpen werden dann wieder in Betrieb gesetzt. Das Tier kann auch Saufen, wenn der Puffer entleert ist. Dann sind die entsprechenden Pumpen in Betrieb gesetzt.

Als Nahrungsmittelquellen können auch Warm- und/oder Kaltwasserleitungen verwendet werden. Ein automatisierter Einfluss auf das Mischungsverhältnis und auf die Temperatur des Nahrungsmittels ist möglich. Hier kann eine Warm- bzw. Kaltwasserleitung über eine entsprechende Mischbatterie mit dem Puffer verbunden sein, wobei die Mischbatterie ebenfalls über die Steuerung regelbar ist.

Im Rahmen der vorliegenden Erfindung liegt auch, dass ein Temperatursensor in oben beschriebener Weise dem Puffer und/oder der Nahrungsmittelquelle und/oder der Entnahmestelle zugeordnet ist. Jeder Temperatursensor ist dann mit der Steuerung verbunden. Über diesen lässt sich dann die Temperatur an jeder gewünschten Stelle bestimmen und/oder regeln.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1a einen schematisch dargestellten Querschnitt eines erfindungsgemässen Puffers zum Mischen, Speichern und Messen von Nahrungsmittel;
Figur 1b einen schematisch dargestellten Querschnitt des Puffers gemäss Figur la in einer anderen Gebrauchslage;
Figur 2 eine blockschaltbildliche Darstellung von erfindungsgemässen Anschlüssen an den Puffer gemäss den Figuren 1a und 1b;
Figuren 3 und 4 weitere blockschaltbildliche Darstellungen des Puffers mit verschiedenen Anschlüssen;
Figur 5 eine weitere blockschaltbildliche Darstellung zur Steuerung und Regelung des Puffers gemäss den Figuren 1a und 1b.

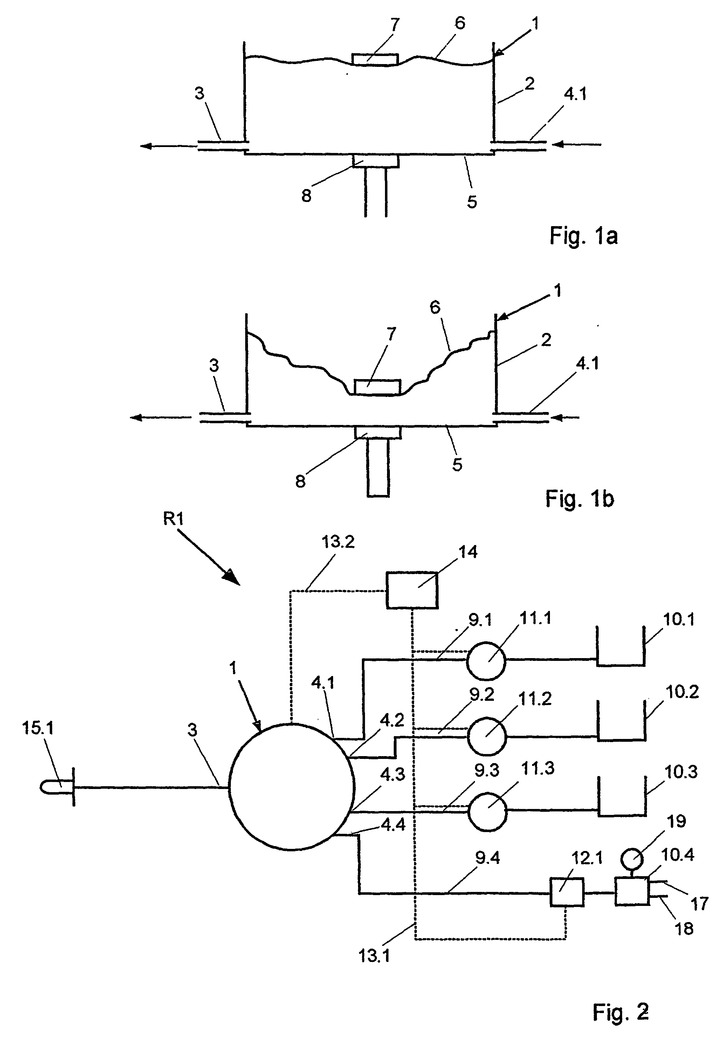

Gemäss Figur 1a weist ein Puffer 1 als Bestandteil einer Einrichtung zum Zwischenspeichern, Mischen, Steuern, Durchflussmessen und Zuführen von Nahrungsmittel für Haustiere, ein Gehäuse 2 auf, welchem ein Auslass 3 und zumindest ein Einlass 4.1 zugeordnet ist. Bevorzugt sind Auslass 3 und Einlass 4.1 gegenüberliegend und nahe einem Gehäuseboden 5 angeordnet. Nach oben hin ist in dem Gehäuse 2 ein volumenveränderbares Element 6 vorgesehen, welches als elastische Membran ausgebildet ist. Jedoch kann auch anstelle der Membran ein im Gehäuse bewegbarer Kolben vorgesehen sein. Das volumenveränderbare Element 6 weist bevorzugt mittig einen Sensor 7 auf, welcher mit einem gegenüberliegenden, dem Gehäuseboden 5 zugeordneten Schalter 8 zusammenwirkt. Das Zusammenwirken von Sensor 7 und Schalter 8 geschieht dann, wenn beispielsweise der Innenraum des Gehäuses 2 durch den Auslass 3 beim Saufen entleert wird. Der Sensor trifft auf den Schalter 8 und erzeugt dort ein Signal.

Wie in Figur 1b dargestellt, zieht sich das volumenveränderbare Element 6 in Richtung Schalter 8 zusammen, wenn das Gehäuse 2 bzw. der Puffer 1 entleert wird. Somit kann der Schalter 8 ein entsprechendes Signal weiterleiten.

Vom vorliegenden Erfindungsgedanken sei hier auch umfasst, dass im Gehäuse 2 des Puffers 1 auch Schikanen od. dgl. Elemente vorgesehen sein können, welche ein gutes Durchmischen des einströmenden Nahrungsmittels bewirken. Auch kann der Puffer 1 als blosses Gehäuse 2 mit Einlässen und Auslässen ausgebildet sein, um das Nahrungsmittel nur zu durchmischen bzw. die verschiedenen Nahrungsmittelquellen zusammenzuführen. Einem derartig ausgebildeten Puffer kann dann ein weiterer Puffer mit elastischer Membran nachgeschaltet sein.

Der Puffer 1 wird hier in einer Einrichtung R₁, wie es in Figur 2 dargestellt ist, als Steuerung, als Zwischenspeicher und als Mischer verwendet. Dabei ist auch von Bedeutung, dass eine Mehrzahl von Einlässen 4.1 bis 4.4 an dem Puffer 1 vorgesehen sind. Dabei verbinden einzelne Zuleitungen 9.1 bis 9.4 die einzelnen Einlässe 4.1 bis 4.4 mit verschiedenen Nahrungsmittelquellen 10.1 bis 10.4 mit dem Puffer 1. In diese Zuleitungen 9.1 bis 9.4 sind zum Steuern und Zuführen von Nahrungsmittel entweder Pumpen 11.1 bis 11.3 und/oder ansteuerbare Ventile 12.1 bis 12.4 eingesetzt. Dabei sind die Pumpen 11.1 bis 11.3 und die Ventile 12.1 bis 12.4, bevorzugt über eine gemeinsame Datenleitung 13.1 mit einer Steuerung 14 verbunden. Als Pumpen 11.1 bis 11.3 werden bevorzugt Schlauchpumpen verwendet. Mit diesen kann sehr exakt eine bestimmte erfassbare bzw. messbare Menge an Nahrungsmittel aus der Nahrungsmittelquelle 10.1 bis 10.3 in dem Puffer 1 transportiert werden. Ist der Puffer befüllt, so kann über den Auslass 3 eine Entnahmestelle 15.1 bis 15.3 versorgt werden. Ein Saufen ist sogar während des Befüllens oder nach einem Entleeren möglich.

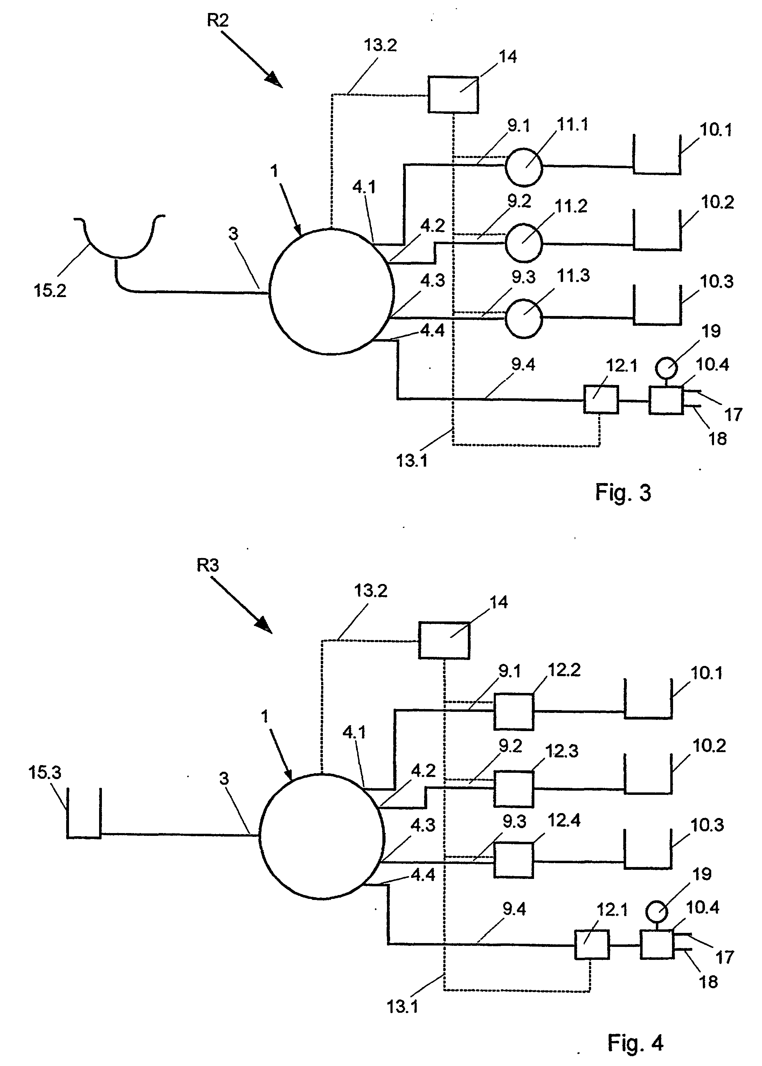

In Figur 2 ist die Entnahmestelle 15.1 als Saugstelle ausgebildet. In Figur 3 ist sie in einer Einrichtung R₂ als Tränkeschale und in Figur 4 in einer Einrichtung R₃ als ein herkömmlicher Nahrungsmittelbehälter ausgebildet.

Als Nahrungsmittelquellen 10.1 bis 10.3 werden herkömmliche Behälter verwendet. Wichtig ist hier, dass eine beliebige Anzahl von Nahrungsmittelbehälter an den Puffer 1 angeschlossen sein kann. Diese können mit unterschiedlichsten Nahrungsmitteln befüllt sein. Es können Nahrungszusätze, Vitamine aber auch Medikamente in den einzelnen Behältern aufgenommen werden. Durch die entsprechende Anordnung von Pumpen oder Ventilen lässt sich sehr exakt mittels der Steuerung 14 bestimmen, welche Menge an Nahrungsmittel aus welchem Behälter dem Puffer 1 zugeführt werden soll. Ein gewünschtes Mischungsverhältnis ist gebildet.

Wird an der Entnahmestelle 15.1 bis 15.3 Nahrungsmittel entnommen, so bewegt sich das elastische Element 6 des Puffers 1 in Richtung Behälterboden 5, wobei über den gegenüberliegenden Schalter 8 ein Signal über eine Datenleitung 13.2 zur Steuerung 14 übermittelt wird. Anschliessend werden die entsprechenden Pumpen 11.1 bis 11.3 oder Magnetventile 12.1 bis 12.4 betätigt, um wieder Nahrungsmittel entsprechend den gewünschten Mengenverhältnissen in den Puffer 1 zu befördern.

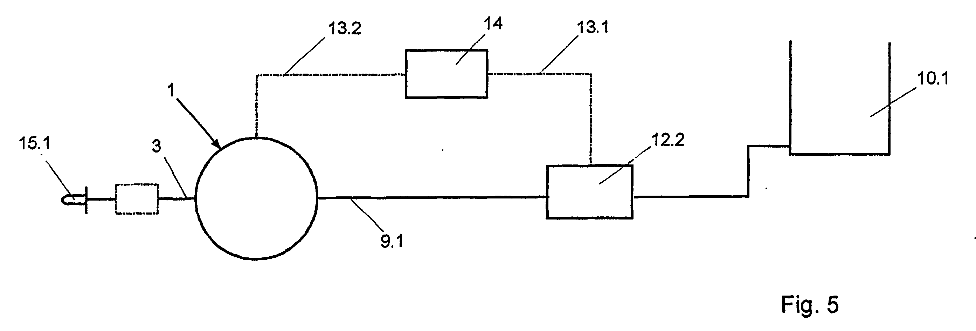

In einem weiteren Ausführungsbeispiel der vorliegenden Erfindung gemäss Figur 5 ist der Puffer 1 über die Datenleitung 13.2 mit der Steuerung 14 verbunden. Ferner ist in die Zuleitung 9.1 das Ventil 12.2 eingesetzt. Dieses ist über die Datenleitung 13.1 ebenso mit der Steuerung 14 verbunden.

Die Nahrungsmittelquelle 10.1 wird über die Steuerung 14 mittels des Ventiles 12.2 betätigt und führt dem Puffer 1 das Nahrungsmittel zu. Allerdings ist auch hier denkbar, das gestrichelt angedeutete Ventil 12.1 zwischen der Entnahmestelle 15.1 und dem Puffer 1 anzuordnen. Dies soll hier vom vorliegenden Erfindungsgedanken ebenfalls umfasst sein.

Wichtig bei der vorliegenden Erfindung ist, dass hier eine Einrichtung R₁ bis R₃ geschaffen ist, mit welcher eine bestimmte Menge, bei jeder gewünschten Temperatur an Nahrungsmittel einer Entnahmestelle geführt werden kann. Dabei kann gerade das Mischungsverhältnis und die zuzuführende Menge sehr genau bestimmt werden.

## Patentansprüche

1. Einrichtung zum Zuführen von flüssigem Nahrungsmittel für Haustiere, insbesondere Kälber oder Lämmer mit einer Entnahmestelle (15.1 bis 15.3), insbesondere Getränkeschale oder Saugstelle und zumindest einer Nahrungsmittelquelle (10.1 bis 10.4), wobei
zwischen der zumindest einen Nahrungsmittelquelle (10.1 bis 10.4) und der Entnahmestelle (15.1 bis 15.2) ein Puffer (1) angeordnet ist, wobei mittels einer Steuerung (14) die Temperatur des Nahrungsmittels im Puffer (1) und an der Entnahmestelle (15.1 bis 15.4) bestimmbar und/oder regelbar ist, und wobei der Entnahmestelle (15.1 bis 15.4) und der Nahrungsmittelquelle (15.1 bis 15.4) zumindest ein Temperatursensor zugeordnet ist, welcher mit der Steuerung (14) in Verbindung steht.

2. Einrichtung nach Anspruch 1, **dadurch gekennzeichnet, dass** zwischen der zumindest einen Nahrungsmittelquelle (10.1 bis 10.4) und der Entnahmestelle (15.1 bis 15.2) ein Puffer (1) angeordnet ist, wobei mittels der Steuerung (14) die Temperatur des Nahrungsmittels im Puffer (1) bestimmbar und/oder regelbar ist, wobei dem Puffer (1) zumindest ein Temperatursensor zugeordnet ist, welcher mit der Steuerung (14) in Verbindung steht.

3. Einrichtung nach Anspruch 1 oder 2, **dadurch gekennzeichnet, dass** zwischen der zumindest einen Nahrungsmittelquelle (10.1 bis 10.4) und der Entnahmestelle (15.1 bis 15.2) ein Puffer (1) angeordnet ist, wobei mittels der Steuerung (14) die Temperatur des Nahrungsmittels an der Entnahmestelle (15.1 bis 15.4) bestimmbar und/oder regelbar ist, wobei der Entnahmestelle (15.1 bis 15.4) zumindest ein Temperatursensor zugeordnet ist, welcher mit der Steuerung (14) in Verbindung steht.

4. Einrichtung nach wenigstens einem der Ansprüche 1 bis 3, **dadurch gekennzeichnet, dass** der Puffer (1) und die Nahrungsmittelquelle (10.1 bis 10.4) mit einer Steuerung (14) verbunden sind.

5. Einrichtung nach wenigstens einem der Ansprüche 1 bis 4, **dadurch gekennzeichnet, dass** dem Puffer (1) und der Entnahmestelle (15.1 bis 15.3) und Nahrungsmittelquelle (10.1 bis 10.4) zumindest ein Temperatursensor zugeordnet ist, welcher mit der Steuerung (14) in Verbindung steht.

6. Einrichtung nach wenigstens einem der Ansprüche 1 bis 5, **dadurch gekennzeichnet, dass** mittels der Steuerung (14) die Temperatur des Nahrungsmittels in dem Puffer (1) und an der Entnahmestelle (15.1 bis 15.3) bestimmbar ist, wobei dem Puffer (1) und/oder der Nahrungsmittelquelle (10.1 bis 10.4) und/oder der Entnahmestelle (15.1 bis 15.3) eine Mehrzahl von Temperatursensoren zugeordnet sind, die mit der Steuerung (14) zur Bestimmung der Temperatur an jeder gewünschten Stelle verbunden sind.

7. Einrichtung nach wenigstens einem der Ansprüche 1 bis 6, **dadurch gekennzeichnet, dass** der Entnahmestelle (15.1 bis 15.3) ein Temperatursensor zugeordnet ist und hierdurch die Temperatur des Nahrungsmittels an der Entnahmestelle (15.1 bis 15.3) regelbar ist.

## Claims

1. Apparatus for supplying liquid feed for domestic animals, more especially calves or lambs, said apparatus having an extraction point (15.1 to 15.3), more especially a drinking trough or suction point, and at least one feed source (10.1 to 10.4), wherein a buffer is disposed between the at least one feed source (10.1 to 10.4) and the extraction point (15.1 to 15.2), wherein the temperature of the feed in the buffer (1) and at the extraction point (15.1 to 15.4) is determinable and/or adjustable by means of a control device (14), and wherein at least one temperature sensor is associated with the extraction point (15.1 to 15.4) and the feed source (15.1 to 15.4 ), which sensor communicates with the control device (14).

2. Apparatus according to claim 1, **characterised in that** a buffer (1) is disposed between the at least one feed source (10.1 to 10.4) and the extraction point (15.1 to 15.2), the temperature of the feed in the buffer (1) being determinable and/or adjustable by means of the control device (14), and at least one temperature sensor being associated with the buffer (1), which sensor communicates with the control device (14).

3. Apparatus according to claim 1 or 2, **characterised in that** a buffer is disposed between the at least one feed source (10.1 to 10.4) and the extraction point (15.1 to 15.2), the temperature of the feed at the extraction point (15.1 to 15.4 ) being determinable and/or adjustable by means of the control device (14), and at least one temperature sensor being associated with the extraction point (15.1 to 15.4 ), which sensor communicates with the control device (14).

4. Apparatus according to at least one of claims 1 to 3, **characterised in that** the buffer (1) and the feed source (10.1 to 10.4) are connected to a control device (14).

5. Apparatus according to at least one of claims 1 to 4, **characterised in that** at least one temperature sensor is associated with the buffer (1) and the extraction point (15.1 to 15.3) and the feed source (10.1 to 10.4), which sensor communicates with the control device (14).

6. Apparatus according to at least one of claims 1 to 5, **characterised in that** the temperature of the feed in the buffer (1) and at the extraction point (15.1 to 15.3) is determinable by means of the control device (14), a plurality of temperature sensors being associated with the buffer (1) and/or the feed source (10.1 to 10.4) and/or the extraction point (15.1 to 15.3), which sensors are connected to the control device (14) for determining the temperature at each desired point.

7. Apparatus according to at least one of claims 1 to 6, **characterised in that** a temperature sensor is associated with the extraction point (15.1 to 15.3), and the temperature of the feed at the extraction point (15.1 to 15.3) is hereby adjustable.

## Revendications

1. Installation pour fournir un aliment liquide à des animaux domestiques, notamment des veaux ou des agneaux, comportant un point de prélèvement (15.1...15.4), notamment une coupelle pour abreuver ou un point d'allaitement et au moins une source d'aliment (10.1...10.4), dans laquelle
- entre au moins une source d'aliment (10.1...10.4) et le point de prélèvement (15.1...15.2) on a un tampon (1),
- à l'aide d'une commande (14) on définit et/ou on règle la température de l'aliment dans le tampon (1) et dans le point de prélèvement (15.1...15.4), et
- le point de prélèvement (15.1...15.4) et la source d'aliment (15.1...15.4) comporte au moins un capteur de température relié à la commande (14).

2. Installation selon la revendication 1,
**caractérisée en ce que**
- entre au moins une source d'aliment (10.1...10.4) et le point de prélèvement (15.1...15.2) on a un tampon (1),
- à l'aide d'une commande (14) on définit et/ou on règle la température de l'aliment dans le tampon (1) et dans le point de prélèvement (15.1...15.4), et
avec au moins un capteur de température associé au tampon (1) et relié à la commande (14).

3. Installation selon l'une quelconque des revendications 1 ou 2,
**caractérisée en ce qu'**
entre au moins une source d'aliment (10.1-10.4) et le point de prélèvement (15.1-15.2) il y a un réservoir tampon (1),
et la commande (14) détermine la température de l'aliment au point de prélèvement (15.1-15.4) et/ou permet de la régler, le point de prélèvement (15.1-15.4) ayant au moins un capteur de température relié à la commande (14).

4. Installation selon l'une quelconque des revendications 1 à 3,
**caractérisée en ce que**
le réservoir tampon (1) et la source d'aliment (10.1-10.4) sont reliés à une commande (14).

5. Installation selon l'une quelconque des revendications 1 à 4,
**caractérisée en ce qu'**
au réservoir tampon (1) et au point de prélèvement (15.1-15.3) et à la source d'aliment (10.1...10.4) on a associé au moins un capteur de température relié à la commande (14).

6. Installation selon l'une quelconque des revendications 1 à 5,
**caractérisée en ce que**
la commande (14) détermine la température de l'aliment dans le tampon (1) et/ou au niveau du point de prélèvement (15.1...15.3), le tampon (1) et/ou la source d'aliment (10.1-10.4) et/ou le point de prélèvement (15.1... 15.3) comportant plusieurs capteurs de température reliés à la commande (14) pour déterminer la température à chaque endroit souhaité.

7. Installation selon l'une quelconque des revendications 1 à 6,
**caractérisée en ce que**
le point de prélèvement (15.1...15.3) comporte un capteur de température et ainsi on peut régler la température de l'aliment au point de prélèvement (15.1-15.3).
